Europäisches Patentamt

European Patent Office

Office européen des brevets

(19)

(11) EP 0 815 921 A1

(12) DEMANDE DE BREVET EUROPEEN

(43) Date de publication:
07.01.1998 Bulletin 1998/02

(51) Int Cl.⁶: **B01D 53/18**, B01D 53/32, B01D 53/14

(21) Numéro de dépôt: 97420106.3

(22) Date de dépôt: 03.07.1997

(84) Etats contractants désignés:
AT BE CH DE DK ES FI FR GB GR IE IT LI LU MC NL PT SE

(30) Priorité: 05.07.1996 FR 9608643

(71) Demandeur: F-Tec Indus S.A.
01630 Saint-Genis-Pouilly (FR)

(72) Inventeur: Fresnel, Jean-Marie
01710 Thoiry (FR)

(74) Mandataire: Moinas, Michel
Cabinet Michel Moinas
13 Chemin du Levant
01210 Ferney-Voltaire (FR)

(54) **Procédé de traitement des effluents gazeux**

(57) Dans le procédé et le dispositif de traitement des effluents gazeux, par exemple,des effluents gazeux de cuisine, on procède à un lavage à contre-courant de ces effluents à l'aide d'une solution basique contenant du noir de carbone dispersé, ce noir de carbone étant polarisé par contact avec des électrodes sous tension situées sur le passage de l'effluent gazeux.

Il s'agit en quelque sorte d'un lavage électrolytique en présence de noir de carbone.

**Description**

La présente invention concerne un procédé de traitement des effluents gazeux avant leur rejet dans l'atmosphère, de façon à les rendre moins nocifs et éviter toute pollution. La présente invention vise en particulier à les rendre acceptables pour l'environnement et à les détoxifier s'il y a lieu. L'invention vise également et tout particulièrement à désodoriser les effluents gazeux malodorants ou nauséabonds.

On sait que les activités humaines domestiques et industrielles génèrent des nuisances gazeuses, tout particulièrement les activités du type usines de compostage, traitement des boues de stations d'épuration, industries chimiques, pharmaceutiques et agro-alimentaires en général, ainsi que des activités plus proprement agricoles telles que le stockage et l'épandage de fumiers et lisiers de volaille et de déchets verts, le stockage des eaux usées. Sont concernées également les cuisines domestiques, collectives et industrielles.

Il s'agit essentiellement de traiter les effluents gazeux de façon à les désodoriser en éliminant les mauvaises odeurs liées à la présence de sulfure et d'hydrogène sulfuré, de composés azotés et d'autres composés organiques du type acides, aldéhydes, cétones et esters.

On connaît divers procédés pour traiter ces effluents, le premier d'entre eux étant l'adsorption chimique sur charbon actif, alumine ou zéolite. En fait le problème n'est que repoussé, car il faut bien trouver un moyen de disposer de façon écologique et économique des composés fixés par le charbon actif responsables des mauvaises odeurs.

D'autres procédés font appel à la combustion mais ces techniques sont voraces en énergie, surtout si les composés volatils sont peu concentrés et les gaz sont froids, et, dans l'état actuel des choses et dans de nombreux cas, inapplicables sur une grande échelle.

D'autres techniques encore utilisent des oxydants tels que l'ozone ou le chlore, mais l'ozone est un gaz difficile à mettre en oeuvre, lui-même toxique, et nécessite des investissements très importants. Quant au chlore, qu'on a remplacé par l'eau de Javel, il faut savoir que, si les effluents contiennent des composés azotés, il peut se former des chloramines volatiles dont l'odeur très prononcée de chlore est tout autant désagréable que l'odeur des effluents gazeux eux-mêmes.

L'invention propose un autre procédé, mettant en oeuvre à la fois des techniques d'adsorption, d'oxydation et de lavage, qui permet d'éliminer des composés organiques nocifs présents dans des effluents gazeux de façon simple, économique, et avec un investissement relativement faible.

L'invention se rapporte donc à un procédé de traitement d'effluents gazeux, en vue notamment de leur désodorisation, dans lequel on procède à un lavage à contre-courant de ces effluents à l'aide d'une solution basique contenant du noir de carbone dispersé, ce noir de carbone étant polarisé par contact avec des électrodes sous tension situées sur le passage de l'effluent gazeux.

Il s'agit en quelque sorte d'un lavage électrolytique en présence de noir de carbone.

En d'autres termes, le traitement est réalisé en présence simultanément de tous les agents actifs, contrairement à ce qui est décrit dans DE-A-41 05 214 où le traitement est fractionné en étapes distinctes et successives, ce qui a comme conséquence immédiate qu'il n'y a pas de polarisation du noir de carbone par des électrodes sous tension.

Une des nombreuses applications du procédé selon l'invention est par exemple le traitement et la désodorisation des "odeurs" de cuisine, c'est-à-dire des effluents gazeux générés par la cuisson, le grill et la friture.

De préférence, le pH de la solution de lavage est maintenu entre 8,5 et 9,4, cette solution pouvant être une solution tampon de carbonate de sodium.

De préférence aussi, le noir de carbone a une granulométrie comprise entre 20 et 350 nm du type "toner" pour photocopieuse ou du type "black carbone", qui est un sous-produit de l'industrie pétrolière.

Le rôle du noir de carbone est d'adsorber les molécules organiques contenues dans les effluents gazeux, de les concentrer dans leurs pores et de les apporter ainsi au contact des électrodes polarisées où elles vont être oxydées. L'oxydation va se produire, soit directement de façon électrochimique ou contact avec les électrodes, soit indirectement avec l'oxygène qui se dégage aux anodes, ou avec l'eau oxygénée $H_2O_2$ qui se forme à partir de l'oxygène de l'air au contact des cathodes.

En ce qui concerne les composés soufrés, sulfures essentiellement, ils sont transformés soit par réaction électrochimique au contact des électrodes, soit par réaction chimique en présence d'eau oxygénée, en sulfates solubles. Le bilan peut être résumé comme suit :

Au contact des anodes, les matières adsorbées, par exemple, les sulfures à l'odeur pestilentielle, s'oxydent, par exemple :

$$S^{2-} + 8\,OH^- \rightarrow SO_4^{2-} + 4H_2O + 8e\text{-}$$

Simultanément, de l'oxygène se dégage, qui à son tour s'adsorbe sur le noir de carbone, l'oxygène adsorbé pouvant aussi provenir de l'oxygène de l'air. Au contact des cathodes, l'oxygène absorbé sur le noir de carbone et apporté par celui-ci se réduit selon la réaction suivante :

$$4O_2 + 8H_2O + 8e^- \rightarrow 4H_2O_2 + 8OH^-$$

L'eau oxygénée produite oxyde les matières restées en solution, par exemple :

$$S^{2-} + 4H_2O_2 \rightarrow SO_4^{2-} + 4H_2O$$

Au total :

$$2S^{2-} + 4O_2 \rightarrow 2SO_4^{2-}$$

les composés soufrés sont transformés en sulfates solubles.

Les composés azotés contenus dans les effluents gazeux, ammoniaques, amines, etc... y sont eux aussi oxydés et disparaissent en tant que composés malodorants sans qu'il ne se crée, comme indiqué plus haut, des chloramines à l'odeur piquante du chlore.

Quant au gaz carbonique $CO_2$ contenu dans l'air, il réagit en solution avec le carbonate selon les équilibres suivants :

$$CO_2 + H_2O + CO_3^{2-} \Leftrightarrow 2HCO_3^-$$

$$HCO_3^- \Leftrightarrow CO_2 + OH^-$$

C'est dire qu'à l'équilibre du $CO_2$ se dégage et c'est la raison pour laquelle on préfère, comme solution de lavage, une solution tampon de carbonate. On peut utiliser aussi une solution de soude, mais il y aura une consommation de réactif, le $CO_2$ réagissant avec celle-ci.

Au final, on notera qu'il se forme des sulfates solubles qui finissent par se concentrer dans la solution de lavage. Il suffit de purger celle-ci de temps en temps avant recyclage de façon à maintenir la concentration en sulfates en dessous d'une limite acceptable.

En variante, si l'on désire parfaire le traitement de désodorisation par un traitement au chlore, notamment si les effluents gazeux sont pauvres en dérivés azotés, on peut ajouter dans la solution de lavage du chlorure de sodium qui va générer le chlore in situ par électrolyse, de la même façon que l'électrolyse génère in situ de l'eau oxygénée.

Quant aux électrodes, la densité de courant qui leur est appliquée dépend de la nature des effluents gazeux et est calculée en fonction de celle-ci, et on travaillera par exemple sous une densité de courant anodique compris entre 50 et 600 A/m$^2$, par exemple 200A/m$^2$, sous une tension électrique comprise par exemple entre 5 et 10 V par paire d'électrodes. Le nombre d'électrodes sera lui aussi en fonction des effluents gazeux à traiter et de leurs concentrations. Bien entendu, les électrodes utilisées sont résistantes à la corrosion dans les conditions du lavage électrolytique et le cheminement du contre-courant gaz/solution de lavage sera rendu aussi compliqué que possible, pour augmenter au maximum la surface de contact.

Les composés organiques du type acides, aldéhydes, cétones et alcools sont oxydés en acides, qui sont fixés sous forme soluble par le lavage alcalin et disparaissent des effluents gazeux.

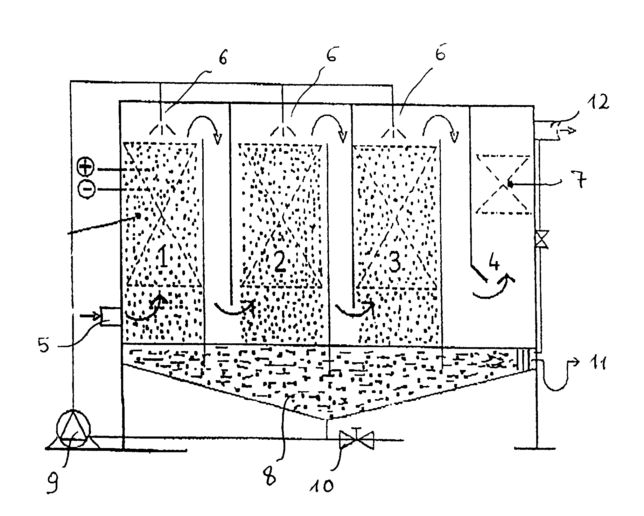

L'invention concerne également un dispositif pour la mise en oeuvre du procédé de traitement ci-dessus et il va être décrit ci-après un tel dispositif, donné à titre d'exemple non limitatif, en relation avec la figure unique.

Comme on le voit sur cette figure, la zone réactionnelle est divisée en trois chambres 1, 2 et 3 analogues, les effluents gazeux à traiter entrant par une entrée 5 et cheminant à contre-courant, vers le haut, à l'encontre d'une solution de lavage tombant en douche 6 depuis le haut de la chambre 1 et ruisselant à contre-courant. Les effluents ainsi traités rentrent alors par le bas dans une deuxième chambre réactionnelle 2 munie d'un système de douche analogue 5, puis ainsi de suite pour une troisième zone réactionnelle 3, avant de passer enfin dans une quatrième zone 4, non réactionnelle, dans laquelle les particules solides peuvent décanter et où est disposé, avant rejet des effluents vers l'atmosphère, un dévésiculeur 7 servant à retenir les gouttelettes liquides et les particules qui auraient pu être entraînées par l'air. Les effluents traités sont évacués vers l'extérieur par une sortie 12. La partie basse du dispositif est constituée d'un caisson 8 qui recueille la solution de lavage.

Comme on le voit sur la figure, un espace est ménagé entre chaque chambre pour la circulation descendante de l'effluent gazeux et la solution de lavage se retrouve stockée dans un réservoir formé par le fond du caisson 8 dans lequel sont définies les différentes chambres 1,2,3,4. Cette solution de lavage est mise en circulation entre le réservoir et les éléments de pulvérisation par douche 5 en position supérieure, au moyen d'une pompe à vortex 9 qui ne broie pas les particules solides, le noir de carbone, en suspension dans la solution.

Afin que l'installation fonctionne en régime automatique, elle comporte une pompe doseuse 10 asservie au pH, avec des limites comprises par exemple entre 8,5 et 9,4 et une mise à niveau du réservoir de stockage en pied de caisson, au moyen d'eau adoucie.

On trouve enfin une purge 11 qui permet de prélever régulièrement de la solution de lavage usée, contenant les sulfates solubles, afin de la remplacer par de l'eau. On a constaté en effet qu'il n'était pas nécessaire d'ajouter du carbonate, sans doute par suite de l'absorption de $CO_2$ ; en revanche on maintient le pH dans les limites évoquées ci-dessus en injectant de la soude avec la pompe doseuse. La soude ajoutée est essentiellement destinée à compenser les pertes par purge et non celles qui résulteraient du mécanisme réactionnel.

Les chambres réactionnelles 1,2,3 comprennent des électrodes disposées horizontalement, perpendiculairement dans le sens général du déplacement des effluents, et en quinconce.

Comme indiqué plus haut, les grains de noir de carbone dispersés dans la solution de lavage adsorbent les matières gazeuses contenues dans les effluents, cette adsorption étant précédée par un stade intermédiaire de mise en solution des composés soufrés en milieu basique.

Les grains de noir de carbone entraînés par la solution viennent alors toucher les électrodes, enclenchant le processus d'oxydation défini plus haut.

Les électrodes sont disposées en paires anode/cathode, à faible distance l'une de l'autre, en sorte qu'il s'établisse de façon continue une couche liquide permanente entre elles. L'écartement est en général de l'ordre de 3 à 5 mm et il est maintenu soit au moyen de tiges plastiques fixées sur l'électrode inférieure et sur laquelle l'électrode supérieure vient prendre appui, soit par des billes en matière plastique non conductrices logées dans des trous correspondants ménagés dans l'électrode supérieure.

Ces paires d'électrodes sont disposées en quinconce de manière à occuper de façon optimale tout le volume des chambres réactionnelles. Le nombre d'électrodes est fonction de la nature des éléments à traiter et de leurs concentrations ; par exemple, pour des effluents de cuisine industrielle riches en composés soufrés et en composés de type aldéhydes, on trouvera neuf paires d'électrodes réparties par multiples de trois en quinconce sur une hauteur de 0,40 m.

Les électrodes doivent être évidemment insensibles à la corrosion dans les conditions du lavage électrolytique et de la présence du noir de carbone, et on choisira avantageusement des électrodes en titane recouvertes d'une fine couche de platine ou d'autres métaux nobles ou précieux , ou en titane revêtues d'oxydes de métaux nobles ou précieux.

De préférence, les électrodes sont réalisées sous forme d'un couple anode/cathode, avec une anode en position supérieure sous forme d'une grille, disposée parallèlement à la distance désirée d'une cathode sous forme d'une plaque, ou vice-versa. C'est-à-dire que c'est la cathode qui est en position supérieure sous forme d'une grille et l'anode en position inférieure sous forme d'une plaque. La disposition grille en haut, plaque en bas, assure un excellent ruissellement de la solution de lavage alcaline et garantit une bonne homogénéité du film de liquide qui s'établit entre les deux électrodes et permet le passage du courant électrique.

Afin de rendre le cheminement de la solution de lavage aussi compliqué que possible et augmenter au maximum le temps de contact entre celle-ci et les effluents gazeux, on dispose avantageusement entre les électrodes des plaques servant d'espaceurs, résistantes à la corrosion, par exemple, en titane ou en matériau plastique tel que du polypropylène, également disposées en quinconce.

L'objectif est d'atteindre une distance de l'ordre de 2 à 5 cm entre les couples d'électrodes ou entre un couple d'électrodes et un espaceur. L'objectif également à atteindre, en disposant judicieusement les électrodes et les espaceurs, est d'obtenir un espacement du même ordre de grandeur, par exemple, 4 cm d'un bout d'un espaceur ou d'une paire d'électrodes au bout d'un autre espaceur ou d'une autre paire d'électrodes lorsqu'elles sont disposées en vis-à-vis ou sensiblement en vis-à-vis.

On aura compris que le procédé selon l'invention présente l'avantage d'être "écologiquement propre", car en bilan final, il n'utilise comme réactif que l'oxygène produit par l'électrolyse ou provenant des effluents à traiter, en générant in situ de l'eau oxygénée et en oxydant les composés organiques présents dans les effluents.

**Revendications**

1. Procédé de traitement des effluents gazeux, dans lequel on procède à un lavage à contre-courant de ces effluents à l'aide d'une solution basique contenant du noir de carbone dispersé, caractérisé en ce que ce noir de carbone est polarisé par contact avec des électrodes sous tension situées sur le passage de l'effluent gazeux.

2. Procédé selon la revendication 1, caractérisé en ce que le noir de carbone absorbe et concentre dans ses pores les molécules organiques contenues dans les effluents gazeux et les apportent au contact des électrodes polarisées où ces molécules vont être oxydées.

3. Procédé selon la revendication 1 ou 2, caractérisé en ce que le noir de carbone absorbe les molécules organiques et absorbe et transporte l'oxygène contenu dans l'air ou résultant de l'oxydation de l'eau de lavage à l'anode, cet oxygène étant apporté par le carbone au contact de la cathode où il se réduit en donnant de l'eau oxygénée, laquelle oxyde les matières restées en solution.

4. Procédé selon la revendication 1, caractérisé en ce que la solution de lavage basique est une solution tampon de carbonate.

5. Dispositif pour la mise en oeuvre du procédé selon l'une quelconque des revendications précédentes, caractérisé en ce qu'il comprend une chambre au moins agissant en tant que zone réactionnelle dans laquelle la solution de lavage est admise en haut et ruisselle à contre-courant des effluents gazeux admis par le bas, les électrodes étant situées à l'intérieur de la chambre et disposées en paires anode/cathode à faible distance l'une de l'autre.

6. Dispositif selon la revendication 5, caractérisé en ce que les électrodes sont en titane recouvertes d'une fine couche de platine ou d'oxydes de métaux nobles.

7. Dispositif selon la revendication 5, caractérisé en ce qu'il comprend trois chambres réactionnelles (1,2,3) disposées en série.

8. Dispositif selon la revendication 7, caractérisé en ce qu'il comprend, en sortie des effluents traités, une quatrième chambre non réactionnelle (4).

9. Dispositif selon la revendication 5, caractérisé en ce que les chambres réactionnelles, qui comprennent les électrodes, comprennent aussi des espaceurs non conducteurs destinés à maintenir l'écartement entre les paires d'électrodes.

10. Dispositif selon la revendication 5, caractérisé en ce que l'écartement entre anode et cathode d'une même paire est plus petit que l'écartement entre les paires d'électrodes.

Office européen
des brevets

**RAPPORT DE RECHERCHE EUROPEENNE**

Numéro de la demande

EP 97 42 0106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,X<br>A | DE 41 05 214 A (BISCHOFF GASREINIGUNG) 27 août 1992<br>* colonne 1, ligne 17 - colonne 2, ligne 7; revendications 1,4; figure 1 *<br>--- | 1,2<br><br>5 | B01D53/18<br>B01D53/32<br>B01D53/14 |
| A | US 3 824 163 A (MAGET H) 16 juillet 1974<br>* revendication 1 *<br>--- | 1,2 | |
| X | PATENT ABSTRACTS OF JAPAN<br>vol. 011, no. 242 (C-438), 7 août 1987<br>& JP 62 049931 A  (KENICHI NAKAGAWA), 4 mars 1987,<br>* abrégé *<br>--- | 5 | |
| X | FR 2 619 022 A (BELIN CHRISTIAN) 10 février 1989<br>*abrégé*<br>* revendication 2 *<br>--- | 5 | |
| A | GB 2 147 525 A (BISCHOFF GASREINIGUNG) 15 mai 1985<br>* figure 1 *<br>--- | 5 | DOMAINES TECHNIQUES RECHERCHES (Int.Cl.6) |
| A | US 3 960 505 A (MARKS ALVIN M) 1 juin 1976<br>* figure 1 *<br>----- | 5 | B01D<br>B01J |

Le présent rapport a été établi pour toutes les revendications

| Lieu de la recherche | Date d'achèvement de la recherche | Examinateur |
|---|---|---|
| LA HAYE | 7 octobre 1997 | Faria, C |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)